# EUROPÄISCHE PATENTSCHRIFT

(11) **EP 1 369 386 B1**
(45) Veröffentlichungstag und Bekanntmachung des Hinweises auf die Patenterteilung: **12.08.2009**
(21) Anmeldenummer: 03012344.2
(22) Anmeldetag: 30.05.2003
(51) Int. Cl.: C02F 3/22, C02F 3/12, B01F 3/04

(54) **Einrichtung zur Belüftung von Abwasser und zur Reinigung einer Membrananlage und diese aufweisende kleine Kläranlage oder Kleinkläranlage**
Device for aeration of waste water and for cleaning a membrane assembly and small-scale waste water treatment plant containing this device
Dispositif d'aération d'eaux usées et de nettoyage d'une installation à membranes et microstation d'épuration d'eau contenant ce dispositif

(30) Priorität: 31.05.2002 DE 10224327; 31.05.2002 DE 20208446 U; 28.02.2003 DE 10308660
(43) Veröffentlichungstag der Anmeldung: 10.12.2003
(73) Patentinhaber: RHEBAU Rheinische Beton- und Bauindustrie GmbH & Co., 41541 Dormagen (DE)
(72) Erfinder: Galle, Michael, 41836 Hückelhoven (DE); Jungen, Christoph, 41515 Grevenbroich (DE); Blinn, Uwe, 41539 Dormagen (DE)
(74) Vertreter: Hauck Patent- und Rechtsanwälte

(56) Entgegenhaltungen:
- EP-A- 0 465 043
- WO-A-00/37369
- GB-A- 2 059 790
- US-A- 4 411 780

## Beschreibung

Die vorliegende Erfindung betrifft eine kleine Kläranlage oder Kleinkläranlage.

Es ist bekannt, Abwasser zu seiner Reinigung zu belüften, um auf diese Weise Sauerstoff in das Abwasser einzutragen. Solche Abwasserbecken können dabei beispielsweise als belüftete Belebungsbecken ausgebildet sein oder ein belüftetes Festbett oder eine belüftete Membrananlage enthalten. Zur Belüftung von derartigen Abwasserbecken ist es bekannt, Luft über Zuführrohre in das Abwasserbecken einzuführen und über im unteren Bereich des Abwasserbeckens angeordnete Belüfter nach oben abzugeben. Derartige Belüfter sind relativ aufwendig ausgebildet und stellen für die hier in Rede stehenden kleinen Kläranlagen oder Kleinkläranlagen aufwendige und kostspielige Einrichtungen dar.

Aus der EP 0 826 638 B1 ist eine Einrichtung zur Abwasserreinigung bekannt, die ein Becken für das Abwasser und eine Strahlpumpe aufweist, deren Saugseite mit einer Luftleitung zur Zuführung von Luft verbunden und deren Druckseite in das Becken gerichtet ist. Ferner sind Mittel zur Umschaltung der Luftleitung von der Luftansaugung zur Abwasseransaugung aus dem Becken vorgesehen. Auch diese Abwasserreinigungseinrichtung ist für größere Anlagen geeignet, da hierfür eine Strahlpumpe erforderlich ist, deren Treibdüse von einer Druckwasserpumpe gespeist wird. Die Strahlpumpe saugt auf ihrer Saugseite Luft aus der Atmosphäre an, die von dem aus der Treibdüse kommenden Treibstrom mitgerissen und mit diesem vermischt und in das in dem Becken befindliche Abwasser in Form von feinen Bläschen eingetragen wird.

Aus der GB-A-2 059 790 ist eine Kläranlage mit den Merkmalen des Oberbegriffs von Patentanspruch 1 bekannt. Die bekannte Kläranlage weist eine eingetauchte Pumpe auf, die zu Belüftungszwecken Abwasser umwälzt, wobei über einen Strahlpumpeneffekt Luft in das Abwasser eingeführt wird.

Aus der EP-A-0 465 043 ist eine Ejektorpumpe bekannt, die beispielsweise in einem Wasserreinigungssystem eingesetzt werden kann.

Die US-A-4 411 780 betrifft eine Kläranlage, bei der in einer Abwasserumwälzleitung außerhalb eines Abwasserbeckens eine Umwälzpumpe angeordnet ist, die Abwasser umwälzt, wobei.über ein Strahlpumpeneffekt Luft in das Abwasser eingeführt wird. Diese Umwälzpumpe kann auch als Schlammabführpumpe verwendet werden, wobei Schlamm über die Mischkammer der Strahlpumpe angesaugt und über eine Schlammabführleitung abgeführt wird. Um dies zu ermöglichen, ist eine spezielle Bypassleitung vorgesehen.

Der Erfindung liegt die Aufgabe zugrunde, eine kleine Kläranlage oder Kleinkläranlage zu schaffen, die sich durch einen besonders einfachen und kostengünstigen Aufbau und eine besonders robuste Betriebsweise auszeichnet.

Diese Aufgabe wird erfindungsgemäß durch einer kleine Kläranlage oder Kleinkläranlage mit den Merkmalen von Patentanspruch 1 gelöst.

Bei der erfindungsgemäßen Lösung findet eine einfache und robuste sowie kostengünstige Tauchpumpe Verwendung, die im Abwasserbecken angeordnet ist und das Abwasser über eine Abwasserumwälzleitung umwälzt, d.h. das Abwasser ansaugt, durch die Abwasserumwälzleitung drückt und am Ende der Abwasserumwälzleitung wieder in das Abwasserbecken abgibt. Auf diese Weise erfolgt eine Homogenisierung des Abwassers im Abwasserbecken. In die Abwasserumwälzleitung mündet eine Luftleitung, so daß beim Umwälzen des Abwassers durch die Abwasserumwälzleitung Luft in die Umwälzleitung gesaugt und mit dem Abwasser vermischt wird, so daß stromab der Mündung der Luftleitung ein Abwasser/Luft-Gemisch gefördert und in das Abwasserbecken eingeführt wird. Auf diese Weise wird das Becken belüftet. Gleichzeitig findet, wie erwähnt, eine Homogenisierung des Abwassers im Becken statt, wodurch der Abwasserreinigungseffekt verstärkt wird.

Die Abwasserumwälzleitung kann an einer beliebigen Stelle im Abwasserbecken enden. Dies kann beispielsweise im Bodenbereich des Abwasserbeckens der Fall sein. Die Leitung kann aber auch gezielt auf entsprechende Einrichtungen im Becken geführt werden.

. Je nach Anwendungsfall kann das in das Becken eingeführte Abwasser/Luft-Gemisch zu Belüftungszwecken bzw. Homogenisierungszwecken und zusätlich zu Reinigungszwecken eingesetzt werden.

Die gewünschte Belüftung wird somit mit einfachen Mitteln erreicht, da lediglich eine robuste und billige Tauchpumpe in Verbindung mit einer Umwälzleitung, in die eine Luftleitung mündet, verwendet werden muß. Komplizierte Einrichtungen, wie spezielle Belüfter, Strahlpumpen mit Druckwasserpumpen etc., können entfallen.

In der Abwasserumwälzleitung ist eine Mischkammer zur Vermischung von Luft und Abwasser angeordnet. Diese Mischkammer ist im Bereich der Mündung der Luftleitung in die Abwasserumwälzleitung bzw. angrenzend hieran stromab der Luftleitung vorgesehen. In ihr findet eine innige Vermischung der eingeführten Luft mit dem Abwasser statt, wobei die Luft in feinblasiger Form im Abwasser mitgeführt wird.

Die Tauchpumpe dient ferner als Schlammpumpe, die zur Schlammabführung aus dem Belebungsbecken verwendet wird. Hierzu ist die Abwasserumwälzleitung mit einer hiervon abzweigenden Schlammabführleitung versehen, die stromauf der Mischkammer abzweigt. In der Schlammabführleitung ist ein Absperrventil angeordnet. Durch Schließen oder Öffnen dieses Absperrventils kann von Belüftungs/Reinigungsbetrieb auf Schlammrückführbetrieb oder umgekehrt geschaltet werden, so dass bei der erfindungsgemäßen Lösung eine zusätzliche Schlammpumpe entfallen kann.

In Weiterbildung der Erfindung ist in der Luftleitung ein Absperrventil angeordnet. Mit diesem Absperrventil kann die zugeführte Luft dosiert oder ganz abgesperrt werden. Im letztgenannten Fall wird durch die Abwasserumwälzleitung nur Abwasser umgewälzt, beispielsweise in einer Betriebsphase, in der lediglich eine Homogenisierung des im Becken befindlichen Abwassers gewünscht wird. Durch Betätigung des Absperrventils in der Luftleitung lässt sich somit der Lufteintrag und damit Sauerstoffeintrag in das Abwasserbekken steuern. Somit lassen sich Prozesse, wie Nitrifikation oder Denitrifikation, mit einfachsten Mitteln einstellen.

Die Abwasserumwälzleitung weist einen oberhalb des Abwasserspiegels im Abwasserbecken angeordneten Abschnitt auf, in den die Luftleitung mündet. Die Abwasserumwälzleitung erstreckt sich daher von der im Becken innerhalb des Abwassers angeordneten Tauchpumpe nach oben aus dem Abwasser heraus und geht in einen horizontal angeordneten Abschnitt über, in den die Luftleitung mündet. Die Umwälzleitung erstreckt sich dann vorzugsweise wieder senkrecht in das Abwasser hinein. Dadurch, daß ein Abschnitt der Umwälzleitung oberhalb des Abwasserspiegels im Abwasserbecken vorhanden ist, ist dieser Leitungsbereich sichtbar und kann einfacher gewartet und ausgetauscht werden, ohne daß das Abwasser aus dem Abwasserbecken abgelassen werden muß. Zweckmäßigerweise besitzt hierbei die Abwasserumwälzleitung einen austauschbaren Abschnitt, in den die Luftleitung mündet, wobei dieser austauschbare Abschnitt vorzugsweise einen Teil des Abschnittes bildet, der oberhalb des Abwasserspiegels angeordnet ist. Mit einem solchen Abschnitt läßt sich der kritische Bereich, in den die Luftleitung mündet (Mischkammer), besonders gut warten und austauschen.

Es versteht sich, daß am Mündungsende der Abwasserumwälzleitung im Abwasserbecken geeignete Einrichtungen angeordnet sein können, um für eine entsprechende Verteilung des Abwasser/Luft-Gemisches zu sorgen. Beispielsweise können hierbei diverse Zweigrohre angeordnet sein, die das Gemisch verschiedenen Stellen im Becken zuführen. Falls gewünscht, können auch entsprechende Düseneinrichtungen oder andere Einrichtungen vorgesehen sein, um für eine entsprechende Feinverteilung des Abwasser/Luft-Gemisches zu sorgen.

Wie vorstehende Ausführungen zeigen, sieht die Erfindung insgesamt eine einfache und robuste Möglichkeit zur Abwasserbelüftung vor. Dadurch, daß die Mündungsstelle der Luftleitung in die Abwasserumwälzleitung oberhalb des Abwasserspiegels angeordnet ist, läßt sich die Einrichtung auch in einfacher Weise handhaben (Luftdosierung) und warten, da ein Ablassen des Abwassers nicht erforderlich ist.

Die Erfindung betrifft ferner eine kleine Kläranlage oder Kleinkläranlage mit einer in einem Belebungsbekken angeordneten Membrananlage mit einer Vielzahl von Membranmodulen, einer Belüftungseinrichtung für die Membrananlage und einer Reinigungseinrichtung für die Membrananlage.

Derartige kleine Kläranlagen oder Kleinkläranlagen sind bekannt. Die Membrananlagen dieser kleinen Kläranlagen oder Kleinkläranlagen bestehen beispielsweise aus einer Vielzahl von nebeneinander und parallel zueinander angeordneten Membranmodulen, die sich aus zwei Außenmembranen und einem zwischen diesen angeordneten Rahmen zusammensetzen. Durch Druckunterschiede zwischen dem Innenraum der Membranplatten und dem außerhalb von diesen befindlichen Raum dringt der flüssige Teil des Abwassers durch die Membranen in den Innenraum der Platten und wird von dort als sogenanntes Permeat abgezogen. Die festen Bestandteile des Abwassers verbleiben im Belebungsbecken und sammeln sich dort als Klärschlamm an, der mittels Belüftung biologisch behandelt wird.

Es ist ferner bekannt, derartige Membrananlagen zu belüften, um analog zu einem belüfteten Belebungsbecken den erzielten Kläreffekt zu verbessern. Zur Durchführung einer derartigen Belüftung wird Luft über Zuführrohre in das Belebungsbecken eingeführt und über Belüfter nach oben abgegeben.

Es versteht sich, dass derartige Membrananlagen periodisch gereinigt werden müssen, um den sich auf den Membranen absetzenden Schlamm zu entfernen. Hierzu hat man spezielle Reinigungsvorrichtungen verwendet.

Bei der vorliegenden Erfindung werden die Belüftung und Reinigung der Membrananlage auf besonders kostengünstige Weise durchgeführt.

Dies wird dadurch realisiert, daß Belüftungs- und Reinigungseinrichtung kombiniert sind und eine Belüftungseinrichtung der vorstehend beschriebenen Art umfassen, deren Tauchpumpe im Belebungsbecken angeordnet ist und deren Abwasserumwälzleitung zur Membrananlage führt.

Bei der erfindungsgemäßen Lösung wird somit zum Belüften und Reinigen der Membrananlage die im Belebungsbecken angeordnete Tauchpumpe verwendet, und das Belüften und Reinigen erfolgt mit einem Luft/Abwassergemisch, das von der Tauchpumpe umgewälzt wird. Die Tauchpumpe fördert Abwasser aus dem Belebungsbecken über die angeordnete Abwasserumwälzleitung bis zu einem Punkt, bei dem das Abwasser mit zugeführter Luft vermischt wird. Das entstandene Luft/ Abwassergemisch wird bis zur Membrananlage im Belebungsbecken weitergefördert, wobei die Membrananlage mit dem Luft/ Abwassergemisch beaufschlagt wird. Mit diesem Luft/ Abwassergemisch wird sowohl eine Belüftung des Belebungsbeckens/der Membrananlage als auch eine Reinigung der Membrananlage erreicht, da durch die Beaufschlagung der Membranmodule mit dem Luft/Abwassergemisch die auf den Membranen befindlichen Schlammschichten, die auf diesen gewachsen sind, von den Membranen gelöst und wieder im Belebungsbecken verteilt werden.

Es ist klar, dass durch die erfindungsgemäße Vorgehensweise die Belüftung und Reinigung der Membrananlage auf sehr kostengünstige Weise durchgeführt werden kann, da hierfür keine getrennten und teuren Belüftungs- und Reinigungsvorrichtungen eingesetzt werden müssen, sondern statt dessen eine einzige robuste Tauchpumpe verwendet werden kann.

In Weiterbildung der erfindungsgemäßen Lösung mündet die Abwasserumwälzleitung im unteren Bereich, insbesondere unter der Membrananlage, in das Belebungsbecken. Die Belüftung der Membrananlage erfolgt somit bei dieser Ausführungsform von unten. Bei einer anderen bevorzugten Ausführungsform der Erfindung mündet die Umwälzleitung seitlich neben der Membrananlage in das Belebungsbecken, so dass bei dieser Ausführungsform die Belüftung der Membrananlage von der Seite aus erfolgt, und zwar parallel zur Ebene der einzelnen Membranmodule, so dass das von der Abwasserumwälzleitung abgegebene Luft/Abwassergemisch parallel zu den Membranmodulen geführt wird und die Zwischenräume zwischen den einzelnen Membranmodulen passiert. Auf diese Weise wird ein besonders guter Belüftungs-/Reinigungseffekt erzielt, da hierbei bei Rechteckmodulen, die so aufgestellt sind, dass ihre längere Seite parallel zur Bodenfläche des Belebungsbeckens angeordnet ist, ein größerer Modulbereich vom zugeführten Luft/Abwassergemisch überstrichen wird.

Das sich im Inneren der Membranmodule sammelnde Permeat wird vorzugsweise über eine Permeatpumpe periodisch abgezogen. Vorzugsweise ist die Tauchpumpe in Betrieb, wenn Permeat von der Membrananlage abgezogen wird. Hiermit wird erreicht, dass Partikel, die sich aufgrund der durch den Permeatabzug entstehenden Sogwirkung auf der Außenseite der Membranen absetzen, durch das Luft/Abwassergemisch, das von der Tauchpumpe zugeführt wird, entfernt werden. Die Membranaußenseiten können sich daher während des Permeatabzuges infolge der Belüftung bzw. Reinigung mit dem Luft/Abwassergemisch nicht zusetzen. Die Tauchpumpe arbeitet daher vorzugsweise in Intervallbetrieb und zwar insbesondere während des Permeatabzuges, während sie sonst außer Betrieb ist.

Bei einer anderen Ausführungsform der Erfindung ist die Tauchpumpe an einem zur Lagerung der Membrananlage dienenden Gestell befestigt. Das Gestell weist dabei vorzugsweise einen horizontalen Flansch, eine horizontale Platte o. dgl. auf, auf dem bzw. der die Pumpe gelagert ist. Das Gestell selbst ist zweckmäßigerweise an der Trennwand zwischen Vorklärbecken und Belebungsbecken befestigt, kann jedoch auch aufgeständert sein oder anderweitig gelagert oder fixiert sein.

Vorzugsweise sind Tauchpumpe und Abwasserumwälzleitung zwischen zwei Paketen von Membranmodulen der Membrananlage angeordnet. Bei dieser Ausführungsform werden beide Pakete aus seitlicher Richtung belüftet, da sich auch die Abwasserumwälzleitung zwischen beiden Paketen nach unten erstreckt und zwischen den Paketen endet. Am Ende der Abwasserumwälzleitung ist vorzugsweise ein T-Stück angeordnet, das die Beaufschlagung in seitlicher Richtung sicherstellt.

Zweckmäßigerweise besitzt die Kläranlage einen oberhalb des Abwasserspiegels angeordneten Permeatsammelbehälter, der vorzugsweise auch von dem Gestell gelagert wird, das zur Lagerung der Membrananlage und der Tauchpumpe dient.

Die Kläranlage umfaßt zweckmäßigerweise eine Permeatabzugseinrichtung, die eine Permeatabzugspumpe, deren Saugseite mit dem Inneren eines Permeatsammelbehälters in Verbindung steht, eine Permeatumwälzleitung, deren eines Ende an die Druckseite der Permeatabzugspumpe angeschlossen ist und deren anderes Ende in den Permeatsammelbehälter mündet, und eine in die Permeatumwälzleitung mündende und von den Membranmodulen ausgehende Permeatabzugsleitung aufweist. Zum Permeatabzug wird daher ebenfalls das Strahlpumpenoder Injektorprinzip (Venturi-Düse) genutzt, um Permeat von der Membrananlage abzuziehen und in den Permeatsammelbehälter einzuführen. Das Treibmittel der Strahlpumpe wird hierbei von dem durch die Permeatumwälzleitung umgewälzten Permeat gebildet. Das zu fördernde Mittel ist das von den Membranmodulen abgeschiedene Permeat, das durch das umgewälzte Permeat in die Umwälzleitung gesaugt wird und auf diese Weise in den Permeatsammelbehälter gelangt. Die Permeatabzugspumpe saugt daher das von den Membranmodulen abzuführende Permeat nicht selbst ab, sondern erzeugt den erforderlichen Strahlpumpen(Injektor)effekt, durch den ein Absaugen des Permeates von den Membranmodulen erreicht wird. Diese Vorgehensweise hat den Vorteil, das hierdurch ein besonders schonender Permeatabzug möglich ist, der sich für die Membranmodule als ideal erweist. Druckschwankungen, die zur Beschädigung der Membranmodule führen könnten, werden durch die erfindungsgemäße Vorgehensweise weitgehend vermieden. Der erfindungsgemäß durch den Strahlpumpeneffekt erzeugte Unterdruck wird allein durch die Förderleistung der Pumpe beeinflußt und ist keinen großen Schwankungen ausgesetzt. Dies ist besonders wichtig, da es sich bei den zum Einsatz kommenden Plattenmembranen um besonders druckempfindliche Elemente handelt.

Zweckmäßigerweise ist der Querschnitt der Permeatabzugsleitung geringer ausgebildet als der Querschnitt der Permeatumwälzleitung, um den gewünschten Strahlpumpeneffekt zu erzielen.

Die Permeatumwälzleitung ist vorzugsweise in der Form eines umgedrehten U ausgebildet. Dabei geht ein vertikaler Abschnitt der Umwälzleitung von der Druckseite der Pumpe aus und geht in einen horizontalen Abschnitt über, der wiederum in einen vertikalen Abschnitt übergeht, welcher in das Innere des Permeatsammelbehälters mündet und zwar vorzugsweise im Bodenbereich desselben. Die erfindungsgemäß eingesetzte Permeatabzugspumpe ist vorzugsweise eine im Permeatsammelbehälter angeordnete Tauchpumpe, die in das Permeat im Sammelbehälter eingetaucht ist und vorzugsweise im Bodenbereich des Sammelbehälters angeordnet ist. Mit einer derartigen Tauchpumpe, die robust und wenig störanfällig ist, läßt sich das Permeat auf betriebssichere Art umwälzen. Darüber hinaus ist die Verwendung einer derartigen Tauchpumpe nicht mit hohen Kosten verbunden.

Der eigentliche Strahlpumpen- bzw. Injektoreffekt (Venturi-Düsen-Effekt) wird im Mündungsbereich der Permeatabzugsieitung in der Permeatumwälzleitung erzeugt. Dort ist eine Mischzone ausgebildet, in der eine Vermischung des umgewälzten Permeates mit dem abgezogenen Permeat stattfindet. Zur Erhöhung des Absaugeffektes kann in diesem Bereich die Permeatumwälzleitung eine Verengung aufweisen, um einen Düsen- bzw. Diffusoreffekt zu erzeugen, durch den die Saugleistung erhöht wird.

Der Mündungsbereich der Permeatabzugsleitung ist vorzugsweise oberhalb des Ablaufes des Permeatsammelbehälters angeordnet. Auf diese Weise ist dieser Bereich zugänglich und nicht in das im Sammelbehälter befindliche Permeat eingetaucht, so daß Störungen in diesem Bereich relativ rasch und einfach behoben werden können. Die Mischzone bzw. der Mündungsbereich befindet sich dabei vorzugsweise im sich vertikal nach unten erstreckenden Abschnitt der Permeatumwälzleitung.

Die Permeatumwälzleitung ist zweckmäßigerweise als Rohr ausgebildet, während die Permeatabzugsleitung vorzugsweise als flexibler Schlauch ausgebildet ist, der beispielsweise von oben in den Permeatsammelbehälter eingeführt werden kann.

In Weiterbildung der Erfindung weist die Permeatumwälzleitung ein Be-/Entlüftungsventil auf. Das Be-/Entlüftungsventil ist zweckmäßigerweise zwischen dem Mündungsbereich der Permeatabzugsleitung und der Pumpe angeordnet. Über dieses Be-/Entlüftungsventil kann in Abhängigkeit vom Betrieb der Pumpe die Permeatumwälzleitung belüftet werden. Vorzugsweise wird beim Abschalten der Pumpe das Be/Entlüftungsventil geöffnet, während es bei Betrieb der Pumpe geschlossen ist. Durch das Belüften der Umwälzleitung wird der auf die Membranen einwirkende Unterdruck abgebaut, so daß sich die Membranen entspannen können. Es fließt nur eine geringe Menge Permeat in die Membrananlage zurück, bis die Permeatabzugsleitung leergelaufen ist. Durch das Entspannen der Membranen (Abbau des Unterdrucks) geht deren durch den auf sie ausgeübten Unterdruck ausgebildete Wölbung zurück, so daß sich hierdurch ein Reinigungseffekt ergibt, da an den Membranen haftende Partikel von diesen gelöst werden. Dies ist wichtig, da derartige Plattenmembranen nicht rückspülbar sind. Erfindungsgemäß wird daher beim Stoppen eines Permeatabzugszyklus ein Membranreinigungseffekt erzielt, wodurch die Membranen über einen längeren Zeitraum funktionsbereit bleiben. Wird die Pumpe wieder in Betrieb gesetzt, schließt das Be-/Entlüftungsventil, so daß der Permeatabzugszyklus einsetzen kann. Es sind geeignete steuerungstechnische Maßnahmen vorgesehen, um ein automatisches Öffnen und Schließen des Be-/Entlüftungsventils beim Stoppen und bei der Wiederaufnahme des Pumpenbetriebes zu erreichen.

Die Erfindung wird nachfolgend anhand von Ausführungsbeispielen in Verbindung mit der Zeichnung im einzelnen erläutert. Es zeigen:
- Figur 1: eine schematische Seitenansicht einer Einrichtung zur Belüftung von Abwasser, die sich in einem Abwasserbecken einer kleinen Kläranlage befindet wobei die Schlammabführleitung nicht dargestellt ist;
- Figur 2: eine Draufsicht auf die Einrichtung der Figur 1;
- Figur 3: eine in einem Belebungsbecken einer kleinen Kläranlage angeordnete Membrananlage mit zugehöriger Permeatabzugs- und Belüftungs/Reinigungseinrichtung in der Seitenansicht;
- Figur 4: die Einrichtung der Figur 3 in der Vorderansicht; und
- Figur 5: die Einrichtung der Figuren 3 und 4 in der Draufsicht.

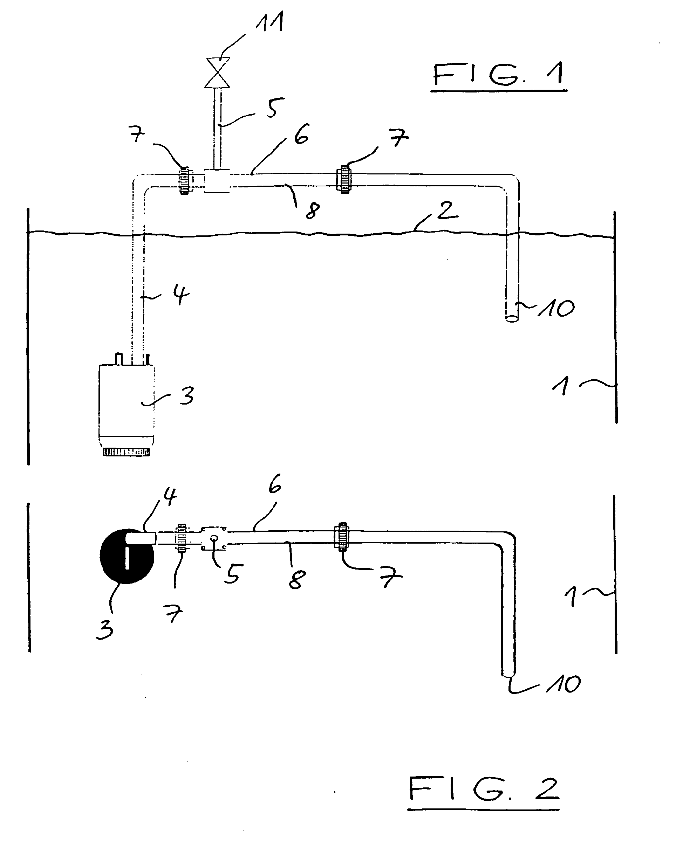

Figur 1 zeigt ein Abwasserbecken 1 einer kleinen Kläranlage, in dem eine Einrichtung zur Belüftung des Abwassers angeordnet ist. Diese Einrichtung umfaßt eine Tauchpumpe 3, die im eingebauten Zustand (Befestigung über nicht gezeigte Halter) unterhalb des Abwasserspiegels 2 angeordnet und somit in das Abwasser eingetaucht ist. Die Saugseite der Tauchpumpe 3 weist nach unten, d.h. in das Abwasserbecken hinein, während ihre Druckseite nach oben weist. Von der Druckseite der Tauchpumpe aus erstreckt sich eine Abwasserumwälzleitung 4 nach oben aus dem Abwasser heraus über einen horizontalen Abschnitt wieder nach unten in das Abwasser hinein. Diese Abwasserumwälzleitung 4 mündet an einer geeigneten Stelle im Abwasserbecken, beispielsweise über den in Figur 1 gezeigten Leitungsabschnitt 10.

In den horizontalen Abschnitt der Abwasserumwälzleitung 4 außerhalb des Abwassers im Becken mündet eine Luftleitung 5. Im Mündungsbereich der Luftleitung ist eine geeignete Mischkammer 6 vorgesehen, um das durch die Abwasserumwälzleitung 4 umgepumpte Abwasser mit Luft aus der Atmosphäre zu vermischen. Das Abwasser wird dabei von der Pumpe 3 im Becken angesaugt und über die Leitung 4 umgewälzt. Durch den durch die Mischkammer 6 geführten Abwasserstrom entsteht ein Unterdruck, der ein Ansaugen von Luft über die Luftleitung 5 bewirkt. In der Mischkammer 6 vermischt sich dabei das Abwasser mit der Luft, so daß von da ab ein Abwasser/Luft-Gemisch gefördert wird, das über den Leitungsabschnitt 10 in das Abwasser eingeführt wird.

Die Luftleitung 5 weist ein Ventil zum Dosieren der zugeführten Luft und zum vollständigen Absperren der Leitung auf. Bei dem Ventil 11 kann es sich um ein geeignetes Magnetventil handeln. Wird das Ventil 11 abgesperrt, wird nur Abwasser durch die Leitung 4 umgewälzt. Durch Öffnen und Schließen des Ventils 11 kann die Luftzufuhr dosiert werden.

Im horizontalen Abschnitt der Abwasserumwälzleitung 4 befindet sich ein leicht austauschbarer Leitungsabschnitt 8, der über lösbare Verbindungen 7 mit der übrigen Leitung verbunden ist. Dieser Abschnitt 8 weist die Mischkammer 6 sowie die daran angeordnete Luftleitung 5 auf. Auf diese Weise kann der Leitungsbereich der Abwasserumwälzleitung, in den die Luftleitung mündet, rasch repariert bzw. gewartet werden, ohne daß hierzu das Abwasser aus dem Becken abgelassen werden muß.

Es wird somit mit einfachen Mitteln eine Einrichtung zur Belüftung von Abwasser, das sich in einem Abwasserbecken befindet, für kleine Kläranlagen oder Kleinkläranlagen vorgesehen. Mit dieser Einrichtung kann eine ausreichende Belüftung des Abwasserbeckens durchgeführt werden, wobei Tauchpumpen mit geringer Leistungsaufnahme für die hier beschriebenen Einsatzzwecke geeignet sind.

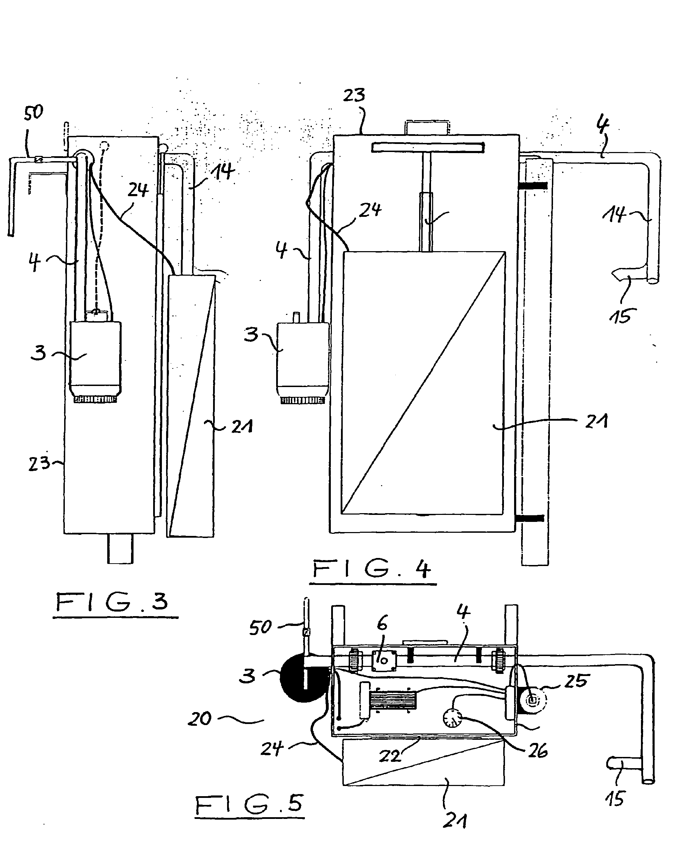

Die Figuren 3-5 zeigen eine in einem Belebungsbecken 20 einer kleinen Kläranlage angeordnete Membrananlage 21 mit zugehöriger Permeatabzugseinrichtung und Belüftungs/ Reinigungseinrichtung. Weitere Einzelheiten des Belebungsbeckens sind nicht gezeigt. Die kleine Kläranlage hat neben dem Belebungsbecken ein Vorklärbecken, aus dem das Abwasser kontinuierlich über eine Tauchwand in das Belebungsbecken 20 gelangt. Das Abwasser wird in der üblichen Weise im Belebungsbecken 20 mit Hilfe der dort angeordneten Membrananlage 21 geklärt. Das durch den Klärvorgang entstandene Permeat wird über eine Permeatpumpe 25 abgezogen. Der entstandene Schlamm wird über eine Tauchpumpe 3 abgeführt.

Bei der im Belebungsbecken 20 angeordneten Membrananlage 21 handelt es sich um sechs vertikal angeordnete rechteckige Membranmodule, die im Abstand voneinander und parallel zueinander angeordnet sind, wobei deren Längsseite parallel zum Boden des Belebungsbecken verläuft. Diese Membranmodule sind über geeignete Befestigungseinrichtungen 22 an einem im Belebungsbecken 20 angeordneten Behälter 23 befestigt. Jeder Modul besteht aus zwei äußeren Membranen und einem die Membranen tragenden mittleren Rahmen. Die flüssigen Bestandteile des Abwassers dringen durch die Membranen nach innen in den zwischen den Membranen vorhandenen Raum und werden von dort über eine geeignete Leitung 24, die in das Innere des Behälters 23 mündet, von der Permeatpumpe 25 abgesaugt. Diese Membrantechnik ist bekannt und wird daher hier nicht mehr im einzelnen beschrieben.

Der im Belebungsbecken 20 angeordnete Behälter 23 dient zur Aufnahme des abgezogenen Permeates und erfüllt in bezug auf das Abziehen des Permeates über die Permeatpumpe 25 eine Pufferfunktion. Auf diese Weise werden zu große Druckschwankungen beim Absaugen des Permeates vermieden, so dass die Membranmodule schonend behandelt werden. Dem Behälter 23 ist ein an einen Druckwächter gekoppeltes Manometer 26 zugeordnet. Eine hiervon unabhängige Niveausonde (nicht gezeigt) überwacht das Wasserniveau im Behälter 23 und sorgt für kontrollierte maximale und minimale Wasserstände (auch bei Sparbetrieb oder Hochwasseralarm).

Ferner ist im Belebungsbecken 20 eine Tauchpumpe 3 angeordnet, die ebenfalls an der Außenseite des Behälters 23 befestigt ist. Bei dieser Tauchpumpe kann es sich um eine Tauchpumpe einer üblichen Bauart handeln. Auf der Druckseite der Tauchpumpe 3 befindet sich eine Abwasserumwälzleitung 4. Die Tauchpumpe saugt das im Belebungsbecken befindliche Abwasser an und drückt dieses durch die Abwasserumwälzleitung 4 wieder in das Belebungsbecken hinein, so dass hiermit ein Umwälzvorgang des Abwassers stattfindet. Die Abwasserumwälzleitung 4 hat bei der in den Figuren dargestellten Ausführungsform einen vertikalen Schenkel, der in einen horizontalen Schenkel übergeht, welcher durch den oberen Bereich des Behälters 23 geführt ist. In diesem oberen Schenkel befindet sich eine Mischkammer 6, die mit einer geeigneten Luftzufuhrleitung (nicht gezeigt) versehen ist. In dieser Mischkammer 6 findet eine Vermischung des umgewälzten Abwassers mit Luft statt, so dass stromab der Mischkammer 6 ein Luft/Abwassergemisch gefördert wird. Dieses Gemisch gelangt vom horizontalen Schenkel der Abwasserumwälzleitung 4 bis zu einem vertikalen Schenkel 14 derselben, der nach unten in das Belebungsbecken führt. Vom vertikalen Schenkel 14 aus zweigt ein kurzer horizontaler Schenkel 15 ab, der seitlich neben der Membrananlage 21 in das Belebungsbecken mündet. Das die Mündung des Schenkels 15 verlassende Luft/Abwassergemisch beaufschlagt somit die einzelnen Module der Membrananlage 21 in seitlicher Richtung, so dass eine Belüftung der Membrananlage und gleichzeitig eine Reinigung der Membranmodule stattfindet. Auf diese Weise wird mit einfachen Mitteln, nämlich einer einfachen robusten Tauchpumpe, eine Belüftung und gleichzeitig eine Reinigung der Membrananlage erreicht.

Die hier dargestellte und beschriebene kleine Kläranlage funktioniert in der folgenden Weise.

Von der Vorklärkammer strömt Abwasser kontinuierlich in das Belebungsbecken 20, bis in diesem ein bestimmter Abwasserstand erreicht ist. Die Membrananlage ist dann im Abwasser eingetaucht. Bei Erreichen eines bestimmten Abwasserstandes erfolgt nunmehr eine Permeatabzugsphase, indem die Permeatpumpe 25 betätigt wird, die Permeat aus dem Behälter 23 absaugt. Über den dadurch entstehenden Unterdruck wird ein Sog in den Membranen erzeugt, wodurch Permeat durch die Membranen in den Innenraum der Membranmodule gezogen und von dort über die Leitung 24 dem Inneren des Permeatbehälters 5 zugeführt wird. Während dieser Permeatabzugsphase wird die Tauchpumpe 3 betätigt, die Abwasser aus dem Belebungsbecken über die Abwasserumwälzleitung 4 umwälzt. Dieses Abwasser wird in der Mischkammer 6 mit Luft vermischt, und das entstandene Luft/Abwassergemisch wird zur Beaufschlagung der Membrananlage wieder in das Belebungsbecken eingeführt. Die Membrananlage wird auf diese Weise belüftet, gleichzeitig werden die Membranoberflächen gereinigt. Wenn der Permeatabzug beendet ist, wird auch die Tauchpumpe außer Betrieb gesetzt, so dass die Belüftung und Reinigung der Membrananlage gestoppt wird, wobei allerdings zur biologischen Reinigung und Schlammstabilisierung auch eine Belüftung außerhalb der Permeatabzugsphase erforderlich ist.

Um den im Belebungsbecken angesammelten Überschußschlamm abzuführen, wird ein in der Abwasserumwälzleitung 4 stromauf der Mischkammer 6 angeordnetes Zweiwegeventil (nicht gezeigt) so betätigt, dass die Abwasserumwälzleitung 4 gesperrt wird. Die Tauchpumpe 3 wird nunmehr eingeschaltet, die dann als Schlammpumpe wirkt und den im Belebungsbecken angesammelten Schlamm über eine entsprechende Schlammabführleitung 50 aus dem Belebungsbecken abführt. Nach Beendigung der Schlammabführphase wird das Zweiwegeventil wieder umgeschaltet, so dass beim nächsten Permeatabzug wieder die Belüftungs- und Reinigungsphase durchgeführt werden kann.

Insgesamt ergibt sich somit eine einfache und kostengünstige Einrichtung, mit der neben einer Belüftung und Reinigung der Membrananlage auch der im Belebungsbecken angesammelte Schlamm abgeführt werden kann.

## Patentansprüche

1. Kleine Kläranlage oder Kleinkläranlage mit einer Belüftungseinrichtung für das sich in einem Abwasserbecken (1) befindende Abwasser, die eine im Abwasserbecken (1) angeordnete und in das Abwasser eingetauchte Tauchpumpe (3), eine Abwasserumwälzleitung (4), deren eines Ende an die Druckseite der Tauchpumpe (3) angeschlossen und deren anderes Ende (10) in das Abwasserbecken (1) geführt ist und die einen oberhalb des Abwasserspiegels im Abwasserbecken (1) angeordneten horizontalen Abschnitt aufweist, und eine in eine Mischkammer (6) der Abwasserumwälzleitung (4) mündende Luftleitung (5) zur Einführung von Luft in das Abwasserbecken (1) umfasst, wobei die Tauchpumpe (3) als Schlammabführpumpe ausgebildet ist, die Mischkammer (6) innerhalb des horizontalen Abschnittes der Abwasserumwälzleitung (4) angeordnet ist und die Abwasserumwälzleitung (4) in Schlammabführrichtung stromauf der Mischkammer (8) mit einer hiervon abzweigenden Schlammabführleitung (50) versehen ist, in der ein Absperrventil angeordnet ist, das bei der Schlammabführung geöffnet ist.

2. Kläranlage nach Anspruch 1, **dadurch gekennzeichnet, daß** in der Luftleitung (5) ein Absperrventil (11) angeordnet ist.

3. Kläranlage nach einem der vorangehenden Ansprüche, **dadurch gekennzeichnet, daß** die Abwasserumwälzleitung (4) einen austauschbaren Abschnitt (8) besitzt, in den die Luftleitung (5) mündet.

4. Kläranlage nach einem der vorangehenden Ansprüche, **dadurch gekennzeichnet, daß** sie eine in einem Belebungsbecken (20) angeordnete Membrananlage (21) mit einer Vielzahl von Membranmodulen, eine Belüftungseinrichtung für das Belebungsbecken (20) und eine Reinigungseinrichtung für die Membrananlage aufweist, wobei Belüftungs - und Reinigungseinrichtung kombiniert sind, deren Tauchpumpe im Belebungsbecken (20) angeordnet ist und deren Abwasserumwälzleitung (4) zur Membrahanlage (21) führt.

5. Kläranlage nach Anspruch 4, **dadurch gekennzeichnet, dass** die Abwasserumwälzleitung (4), unter der Membrananlage (21) in das Belebungsbecken (20) mündet.

6. Kläranlage nach Anspruch 4, **dadurch gekennzeichnet, dass** die Abwasserumwälzleitung (4) seitlich neben der Membrananlage (21) in das Belebungsbecken (20) mündet.

7. Kläranlage nach einem der Ansprüche 4 bis 6, **dadurch gekennzeichnet, dass** die Tauchpumpe (3) an einem im Belebungsbecken (20) angeordneten Permeatsammelbehälter (23) befestigt ist.

8. Kläranlage nach Anspruch 7, **dadurch gekennzeichnet, dass** die Abwasserumwälzleitung (4) vom Permeatsammelbehälter (23) gelagert wird.

9. Kläranlage nach Anspruch 8, **dadurch gekennzeichnet, dass** sich die Abwasserumwälzleitung (4) im oberen Bereich durch den Permeatsammelbehälter (23) erstreckt.

10. Kläranlage nach einem der Ansprüche 4 - 6, **dadurch gekennzeichnet, daß** die Tauchpumpe (3) an einem zur Lagerung der Membrananlage (21) dienenden Gestell (30) befestigt ist.

11. Kläranlage nach einem der Ansprüche 4 - 10, **dadurch gekennzeichnet, daß** Tauchpumpe (3) und Abwasserumwälzleitung (4) zwischen zwei Paketen (31) von Membranmodulen der Membrananlage angeordnet sind.

12. Kläranlage nach einem der Ansprüche 4 - 6 und 10, 11, **dadurch gekennzeichnet, daß** sie einen oberhalb des Abwasserspiegels (2) angeordneten Permeatsammelbehälter (23) besitzt.

13. Kläranlage nach einem der Ansprüche 4 - 12, **dadurch gekennzeichnet, daß** sie eine Permeatabzugseinrichtung umfaßt, die eine Permeatabzugspumpe (32), deren Saugseite mit dem Inneren eines Permeatsammelbehälters (23) in Verbindung steht, eine Permeatumwälzleitung (33) deren eines Ende an die Druckseite der Permeatabzugspumpe (32) angeschlossen ist und deren anderes Ende in den Permeatsammelbehälter (23) mündet, und eine in die Permeatumwälzleitung (33) mündende und von den Membranmodulen ausgehende Permeatabzugsleitung (34) aufweist.

14. Kläranlage nach Anspruch 13, **dadurch gekennzeichnet, daß** der Querschnitt der Permeatabzugsleitung (34) geringer ist als der Querschnitt der Permeatumwälzleitung

15. Kläranlage nach Anspruch 13 oder 14, **dadurch gekennzeichnet, daß** die Permeatumwälzleitung (33) in der Form eines umgedrehten U ausgebildet ist.

16. Kläranlage nach einem der Ansprüche 13 - 15, **dadurch gekennzeichnet, daß** die Permeatabzugspumpe (32) eine im Permeatsammelbehälter (23) angeordnete Tauchpumpe ist.

17. Kläranlage nach einem der Ansprüche 13 - 16, **dadurch gekennzeichnet, daß** der Mündungsbereich der Permeatabzugsleitung (34) oberhalb des Ablaufes (36) des Permeatsammelbehälters (25) angeordnet ist.

18. Kläranlage nach einem der Ansprüche 13-17, **dadurch gekennzeichnet, daß** die Permeatumwälzleitung (33) ein Be-/Entlüftungsventil (37) aufweist.

19. Kläranlage nach Anspruch 18, **dadurch gekennzeichnet, daß** das Be-/Entlüftungsventil (37) zwischen dem Mündungsbereich der Permeatabzugsleitung (34) und der Permeatabzugspumpe (32) angeordnet ist.

20. Kläranlage nach einem der Ansprüche 13 - 19, **dadurch gekennzeichnet, daß** der Permeatsammelbehälter (23) im Vorklärbecken der kleinen Kläranlage oder Kleinkläranlage angeordnet ist.

## Claims

1. A small-scale waste water treatment plant comprising an aeration device for the waste water in a waste water basin (1), wherein the aeration device includes a submergible pump (3) located in the waste water basin (1) and submerged into the waste water, a waste water circulation line (4) one end of which is connected to the pressure side of the submergible pump (3) and the other end (10) of which extends into the waste water basin (1), and which has a horizontal portion located above the waste water level in the waste water basin (1), and an air line (5) opening into a mixing chamber (6) of the waste water circulation line (4) for the introduction of air into the waste water basin (1), wherein the submergible pump (3) is designed as sludge discharge pump, the mixing chamber (6) is located within the horizontal portion of the waste water circulation line (4), and the waste water circulation line (4), in sludge discharge direction upstream of the mixing chamber (8), is provided with a sludge discharge line (50) branching from the same and having located therein a shut-off valve which is opened during the sludge discharge.

2. The waste water treatment plant according to claim 1, **characterized in that** a shut-off valve (11) is disposed in the air line (5).

3. The waste water treatment plant according to one of the preceding claims, **characterized in that** the waste water circulation line (4) has a replaceable portion (8) into which the air line (5) opens.

4. The waste water treatment plant according to one of the preceding claims, **characterized in that** it includes a membrane installation (21) with a plurality of membrane modules arranged in an activated sludge basin (20), an aeration means for the activated sludge basin (20) and a cleaning means for the membrane installation, wherein the aeration means and cleaning means are combined, the submergible pump thereof being arranged in the activated sludge basin (20) and the waste water circulation line (4) thereof leading to the membrane installation (21).

5. The waste water treatment plant according to claim 4, **characterized in that** the waste water circulation line (4) opens into the activated sludge basin (20) below the membrane installation (21).

6. The waste water treatment plant according to claim 4, **characterized in that** the waste water circulation line (4) opens into the activated sludge basin (20) laterally with respect to the membrane installation (21).

7. The waste water treatment plant according to one of the claims 4 to 6, **characterized in that** the submergible pump (3) is fixed to a permeate collecting container (23) arranged in the activated sludge basin (20).

8. The waste water treatment plant according to claim 7, **characterized in that** the waste water circulation line (4) is supported by the permeate collecting container (23).

9. The waste water treatment plant according to claim 8, **characterized in that** the waste water circulation line (4) extends in the upper range through the permeate collecting container (23).

10. The waste water treatment plant according to one of the claims 4-6, **characterized in that** the submergible pump (3) is fixed at a framework (30) serving for the support of the membrane installation (21).

11. The waste water treatment plant according to one of the claims 4-10, **characterized in that** the submergible pump (3) and the waste water circulation line (4) are arranged between two packs (31) of membrane modules of the membrane installation.

12. The waste water treatment plant according to one of the claims 4-6 and 10, 11, **characterized in that** it has a permeate collecting container (23) arranged above the waste water level (2).

13. The waste water treatment plant according to one of the claims 4-12, **characterized in that** it includes a permeate discharge means comprising a permeate discharge pump (32) the suction side of which being connected to the interior of a permeate collecting container (23), a permeate circulation line (33) one end of which being connected to the pressure side of the permeate discharge pump (32) and the other end of which opening into the permeate collecting container (23), and a permeate discharge line (34) opening into the permeate circulation line (33) and emanating from the membrane modules.

14. The waste water treatment plant according to claim 13, **characterized in that** the cross-sectional area of the permeate discharge line (34) is smaller than the cross-sectional area of the permeate circulation line (33).

15. The waste water treatment plant according to claim 13 or 14, **characterized in that** the permeate circulation line (33) has the shape of a reversed U.

16. The waste water treatment plant according to one of the claims 13-15, **characterized in that** the permeate discharge pump (32) is a submergible pump arranged in the permeate collecting container (23).

17. The waste water treatment plant according to one of the claims 13-16, **characterized in that** the opening range of the permeate discharge line (34) is arranged above the exit (36) of the permeate collecting container (25).

18. The waste water treatment plant according to one of the claims 13-17, **characterized in that** the permeate circulation line (33) has a ventilating/bleeding valve (37).

19. The waste water treatment plant according to claim 18, **characterized in that** the ventilating/bleeding valve (37) is arranged between the opening range of the permeate discharge line (34) and the permeate discharge pump (32).

20. The waste water treatment plant according to one of the claims 13-19, **characterized in that** the permeate collecting container (23) is arranged in the preliminary waste water treatment basin of the small-scale waste water treatment plant.

## Revendications

1. Petite installation d'épuration d'eau ou microstation d'épuration d'eau avec un dispositif d'aération pour des eaux usées se trouvant dans un bassin d'eaux usées (1), qui comprend une pompe submersible (3) disposée dans le bassin d'eaux usées (1) et immergée dans les eaux usées, une conduite de recirculation d'eaux usées (4) dont une extrémité est raccordée au côté de refoulement de la pompe submersible (3) et dont l'autre extrémité (10) est menée dans le bassin d'eaux usées (1) et qui présente une section horizontale disposée dans le bassin d'eaux usées (1) au-dessus du niveau des eaux usées, et une conduite d'air (5) débouchant dans une chambre de mélange (6) de la conduite de recirculation d'eaux usées (4) pour l'introduction d'air dans le bassin d'eaux usées (1), dans laquelle la pompe submersible (3) est réalisée sous la forme d'une pompe d'évacuation de boues, la chambre de mélange (6) est disposée à l'intérieur de la section horizontale de la conduite de recirculation d'eaux usées (4) et la conduite de recirculation d'eaux usées (4) est pourvue, en amont de la chambre de mélange (6) dans la direction d'évacuation des boues, d'une conduite d'évacuation de boues (50) dérivée de celle-ci, dans laquelle est disposée une soupape d'arrêt qui est ouverte lors de l'évacuation de boues.

2. Installation d'épuration d'eau selon la revendication 1, **caractérisée en ce qu'**une soupape d'arrêt (11) est disposée dans la conduite d'air (5).

3. Installation d'épuration d'eau selon l'une quelconque des revendications précédentes, **caractérisée en ce que** la conduite de recirculation d'eaux usées (4) comporte une section remplaçable (8), dans laquelle débouche la conduite d'air (5).

4. Installation d'épuration d'eau selon l'une quelconque des revendications précédentes, **caractérisée en ce qu'**elle comprend une installation à membranes (21) avec une pluralité de modules de membrane, disposée dans un bassin de boues activées (20), un dispositif d'aération pour le bassin de boues activées (20) et un dispositif de nettoyage pour l'installation à membranes, dans laquelle le dispositif d'aération et le dispositif de nettoyage sont combinés, dont la pompe submersible est disposée dans le bassin de boues activées (20) et dont la conduite de recirculation d'eaux usées (4) conduit à l'installation à membranes (21).

5. Installation d'épuration d'eau selon la revendication 4, **caractérisée en ce que** la conduite de recirculation d'eaux usées (4) débouche dans le bassin de boues activées (20) en dessous de l'installation à membranes (21).

6. Installation d'épuration d'eau selon la revendication 4, **caractérisée en ce que** la conduite de recirculation d'eaux usées (4) débouche dans le bassin de boues activées (20) latéralement à côté de l'installation à membranes (21).

7. Installation d'épuration d'eau selon l'une quelconque des revendications 4 à 6, **caractérisée en ce que** la pompe submersible (3) est fixée à un réservoir de collecte de perméat (23) disposé dans le bassin de boues activées (20).

8. Installation d'épuration d'eau selon la revendication 7, **caractérisée en ce que** la conduite de recirculation d'eaux usées (4) est supportée par le réservoir de collecte de perméat (23).

9. Installation d'épuration d'eau selon la revendication 8, **caractérisée en ce que** la conduite de recirculation d'eaux usées (4) s'étend dans la région supérieure à travers le réservoir de collecte de perméat (23).

10. Installation d'épuration d'eau selon l'une quelconque des revendications 4 à 6, **caractérisée en ce que** la pompe submersible (3) est fixée à une charpente (30) destinée à supporter l'installation à membranes (21).

11. Installation d'épuration d'eau selon l'une quelconque des revendications 4 à 10, **caractérisée en ce que** la pompe submersible (3) et la conduite de recirculation d'eaux usées (4) sont disposées entre deux paquets (31) de modules de membrane de l'installation à membranes.

12. Installation d'épuration d'eau selon l'une quelconque des revendications 4 à 6, 10 et 11, **caractérisée en ce qu'**elle comporte un réservoir de collecte de perméat (23) disposé au dessus du niveaux des eaux usées (2).

13. Installation d'épuration d'eau selon l'une quelconque des revendications 4 à 12, **caractérisée en ce qu'**elle présente un dispositif d'extraction de perméat, qui comprend une pompe d'extraction de perméat (32), dont le côté d'aspiration est en communication avec l'intérieur d'un réservoir de collecte de perméat (23), une conduite de recirculation de perméat (33), dont une extrémité est raccordée au côté de refoulement de la pompe d'extraction de perméat (32) et dont l'autre extrémité débouche dans le réservoir de collecte de perméat (23), et une conduite d'extraction de perméat (34) partant des modules de membrane et débouchant dans la conduite de recirculation de perméat (33).

14. Installation d'épuration d'eau selon la revendication 13, **caractérisée en ce que** la section transversale de la conduite d'extraction de perméat (34) est plus petite que la section transversale de la conduite de recirculation de perméat (33).

15. Installation d'épuration d'eau selon la revendication 13 ou 14, **caractérisée en ce que** la conduite de recirculation de perméat (33) est réalisée en forme de U inversé.

16. Installation d'épuration d'eau selon l'une quelconque des revendications 13 à 15, **caractérisée en ce que** la pompe d'extraction de perméat (32) est une pompe submersible disposée dans le réservoir de collecte de perméat (23).

17. Installation d'épuration d'eau selon l'une quelconque des revendications 13 à 16, **caractérisée en ce que** la région de l'embouchure de la conduite d'extraction de perméat (34) est située au-dessus de la sortie (36) du réservoir de collecte de perméat (23).

18. Installation d'épuration d'eau selon l'une quelconque des revendications 13 à 17, **caractérisée en ce que** la conduite de recirculation de perméat (33) comprend une soupape d'aération /désaération (37).

19. Installation d'épuration d'eau selon la revendication 18, **caractérisée en ce que** la soupape d'aération/désaération (37) est disposée entre la région de l'embouchure de la conduite d'extraction de perméat (34) et la pompe d'extraction de perméat (32).

20. Installation d'épuration d'eau selon l'une quelconque des revendications 13 à 19, **caractérisée en ce que** le réservoir de collecte de perméat (23) est disposé dans le premier bassin de décantation de la petite installation d'épuration d'eau ou de la microstation d'épuration d'eau.
